Europäisches Patentamt

European Patent Office

Office européen des brevets

(19)

(11) Publication number: **0 007 920**
**B1**

# EUROPEAN PATENT SPECIFICATION

(12)

(45) Date of publication of patent specification: **22.09.82**

(21) Application number: **79930016.5**

(22) Date of filing: **02.08.79**

(51) Int. Cl.³: **H 02 M 1/06, H 02 M 1/18, H 02 M 7/515, G 05 B 24/02**

(54) Auxiliary commutation circuit for an inverter.

(30) Priority: **02.08.78 US 930469**

(43) Date of publication of application:
**06.02.80 Bulletin 80/3**

(45) Publication of the grant of the patent:
**22.09.82 Bulletin 82/38**

(84) Designated Contracting States:
**BE CH DE FR GB IT NL SE**

(56) References cited:
**AT - B - 329 679**
**CH - A - 470 114**
**DE - B - 1 204 320**
**GB - A - 1 393 311**
**US - A - 4 060 757**

(73) Proprietor: **UNITED TECHNOLOGIES CORPORATION**
**1, Financial Plaza**
**Hartford, CT 06101 (US)**

(72) Inventor: **Vivirito, Joseph Rosario**
**350 Diane Drive**
**South Windsor, Connecticut 06074 (US)**

(74) Representative: **Waxweiler, Jean et al,**
**OFFICE DENNEMEYER S.à.r.l. 21-25 Allée Scheffer P.O.Box 41**
**Luxembourg (LU)**

Courier Press, Leamington Spa, England.

Auxiliary commutation circuit for an inverter.

This invention relates to inverters and, more particularly, to an auxiliary commutation circuit for assisting in the commutation of the main thyristors of an inverter during an overcurrent condition.

Inverters are known generally and are devices which transform DC (direct current) electrical energy, such as from a fuel cell or the like, into AC (alternating current) electrical energy suitable for use by utility companies or other consumers of electrical energy. Most inverters include at least one pair of main switching elements, and by alternatively actuating each switch, electrical energy from the DC source flows through the load first in one direction and then in the reverse direction forming a fundamental AC waveform.

Numerous different types of switching devices can be employed in an inverter to reverse the current through the load. Semiconductor switches, such as thyristors, are frequently used in present day inverters and this type of device is typically unidirectional so that the high energy current pulse passes in only one direction from the input terminal to the output terminal when turned on by a suitable signal applied to its control terminal of the semiconductor switch. Some semiconductor switches, as is known, will not immediately change from a conducting to a nonconducting state upon the removal of a control signal from the control terminal but require that the magnitude of the instantaneous current passing from the input terminal to the output terminal be reduced to zero whereupon the semiconductor switch turns off.

The process by which the current is reduced to zero through the semiconductor switch so that it can change from its conducting to its nonconducting state is known as "commutation" and numerous circuit configurations have been proposed for this function. Many commutation circuits operate by presenting a commutation pulse to the load from a storage device, such as a capacitor or resonant circuit, for a period of greater than the turn off time of the semiconductor switch. Since during this period the load current is supplied by the storage device of the commutation circuit, the magnitude of the current through the semiconductor switch drops to zero for a sufficient period to allow transition to the nonconducting state.

It is well known in the art that the amount of energy stored in the commutation capacitors is a function of the value of capacitance of such capacitors as well as the voltage impressed thereacross; however, the amount of stored energy required to commutate the main semiconductor switches is proportional to the magnitude of the current therethrough or the load current, i.e. the greater the magnitude of the load current the more stored energy required to commutate the semiconductor switches. Accordingly, the value of the commutation capacitor is often selected by ascertaining the highest value of load current which must be commutated and then sizing the commutation capacitor such that the necessary commutation pulse can be provided.

A disadvantage of the foregoing method of selection of a commutation capacitor size is that with a large commutation capacitor the no-load losses of the inverter are particularly high in that a commutation pulse having a capability for commutating the full load current is discharged from the storage device during each commutation cycle. In addition to a reduction in overall efficiency, this unnecessary current flow in the primary circuit causes instantaneous rises in the junction temperature and the magnitude of the thermal cycles of the semiconductor switches which both increases the likelihood of failure and also decreases the lifetime of the switching elements and also increases turn off time.

U.S. Patent No. 3,805,141 issued April 16, 1974 to Pompa, Jr. et al., assigned to the same assignee as the present application, discloses a commutation circuit for a bimodal inverter which ensures that the main SCR's are commutated during periods of rapidly increasing load current. A single commutation capacitor (item 44) stores electrical energy therein a means is provided for the purpose of reducing the load current flowing through the main SCR's during the commutation period to that required for extinguishing the semiconductor switch. The time interval between the actuation of the auxiliary commutation circuit and the actuation of the main control rectifier is varied as a function of load in order to ensure that the commutation capacitor is adequately charged to provide a sufficient commutation pulse to decrease the main SCR current to zero. But at lower levels of load current the time interval between the actuation of the auxiliary commutation circuit and the actuation of the main control rectifier is increased so that the commutation capacitor does not store a significant amount of electrical energy greater than that required to extinguish the load current. US Patent 4,060,757 discloses an inverter for converting DC electrical energy into an output waveform with a substantial sinusoidal fundamental component in which semi-conductor switch means are controlled by means of a control waveform of a frequency related to said fundamental sinusoidal component. A main commutation circuit including a primary capacitor storing the energy for commutating the semi-conductor switch means to their nonconducting state is provided, as well as an auxiliary commutation means which is operable in response to an overcurrent condition to connect a secondary capacitor in parallel to the primary capacitor when additional current is required to commutate the semi-conductor switch means to their nonconducting state when the load current exceeds a threshold value. Thereby an inverter having two-level commutating ability is provided in which the auxiliary and the primary capacitor are commutated simultaneously.

The Swiss Patent No. 470,114 also discloses an inverter including a primary capacitor and a secondary capacitor for commutating its semi-conductor switches to their nonconducting state. The secondary capacitor is only connected when the load current exceeds a threshold value. When both capacitors are to be connected they are always connected simultaneously. Again an inverter having two-level commutating ability is provided.

The object of the present invention is to provide an electrical power inverter with improved operating efficiency by providing additional commutation energy during overcurrent conditions.

This object is actived according to the invention by means of an inverter as claimed in claim 1.

Other objects, features and advantages of the present invention will become apparent in the light of the following detailed description of a preferred embodiment as illustrated in the accompanying drawings.

Fig. 1 is a block diagram of a circuit configuration according to the present invention illustrating a power inverter with a commutation circuit including the auxiliary commutation portion,

Fig. 2 is a graph illustrating the waveforms at various points in Fig. 1,

Fig. 3 is a circuit diagram of one embodiment of the current detector shown in Fig. 1.

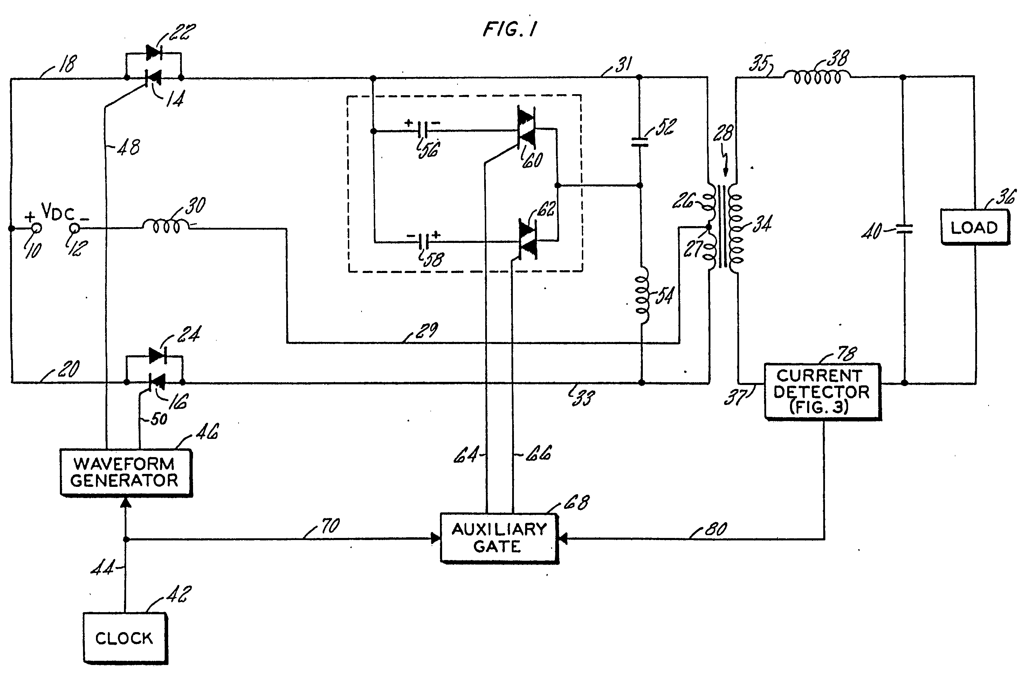

Referring initially to Fig. 1, one embodiment of a power inverter with a commutation circuit according to the present invention is illustrated. A positive input bus 10 and a negative input bus 12 receive DC electrical energy from an external source (not shown), such as a fuel cell or the like. A pair of semiconductor switches, such as thyristor 14 and thyristor 16, are provided, and each is connected to the positive input bus by lines 18 and 20, respectively, in a reverse polarity sense as will be described in greater detail hereinafter. A pair of commutation diodes 22 and 24 are connected across thyristors 14 and 16, respectively, which, in turn, are connected to opposite ends of the primary winding 26 of a transformer 28 by lines 31 and 33, respectively. The primary winding 26 includes a center tap 27 which is connected via lead 29 with inductor 30 and finally to the negative input bus 12. The transformer 28 includes a secondary winding 34 and it is connected by a lead 35 and a lead 37 to a load 36 which ultimately receives the AC electrical output power form the inverter. An output filter consisting of a series connected inductor 38 and a parallel connected capacitor 48 may be provided in the inverter output to reduce the harmonic waveforms in the output of the inverter.

A clock 42 is provided to create a basic timing signal for operation of the inverter and is connected via line 44 to a waveform generator 46. In turn, the waveform generator 46 generates a series of phase related pulses and, via lines 48 and 50, respectively, present the control waveform to the control terminals of the thyristors 14 and 16.

Still referring to Fig. 1, as indicated hereinbefore semiconductor switches, such as thyristors 14 and 16, change from their nonconducting state to their conducting state almost instantaneously in response to the application of a suitable control signal to their control terminal. However, in order to change such semiconductor switches from their conducting to their nonconducting stage, the current therethrough must be reduced to approximately zero for a predetermined period of time before the SCR will turn off. This process is generally known as commutation and in the present invention is performed by a series resonant circuit. This series resonant circuit includes a capacitor 52 and an inductor 54 which is connected to lines 31 and 33 across the primary winding 26 of the transformer 28. According to the present invention, a commutation circuit for an inverter is provided with an auxiliary circuit to assist in commutating the semiconductor switches during periods of overcurrent conditions. This auxiliary circuit comprises a pair of capacitors 56 and 58, each connected in series with a switch, such as a triac 60 and a triac 62, respectively, and this combination is connected in parallel with the main commutation capacitor 52. The control elements of the triacs 60 and 62 are connected via line 64 and 66, respectively, to an auxiliary gate 66 so that each triac can be rendered conductive in response to a suitable control signal applied thereto. A timing signal is applied to the auxiliary gate 68 via a line 70 from the clock 42. A current detector 78 senses the load current in the output circuit and provides a signal along line 80 to the auxiliary gate which is related to both the rate of change of current in the output circuit and also to the maximum value of the output current as will be described in greater detail hereinafter.

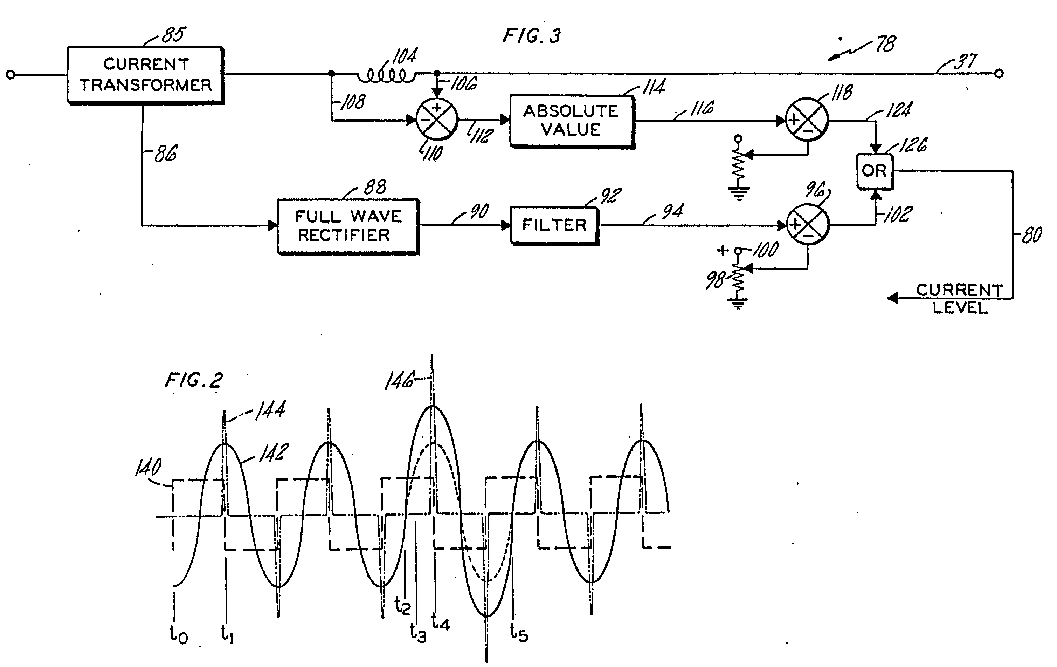

Referring now to Fig. 3, there is shown a circuit diagram of one embodiment of the current detector 78. As hereinbefore described, the current detector provides an output signal on lines 80 when the load current in the line 37 exceeds a predetermined maximum rate of change or absolute value. First considering the absolute value portion of the current detector, a current transformer 85 forms a signal proportional to the magnitude of the current in line 37 and presents it via line 86 to a full wave rectifier 88 which is in turn coupled by line 90 to a filter 92. Accordingly, the voltage level out of the filter 92 directly corresponds to the approximate peak or absolute value of the fundamental current wave form presented to the load 36. The signal level from the filter 92 is presented by a line 94 to one input of a comparator 96. The other input of comparator 96 receives a voltage level input from a potentiometer 98 which has a terminal 100 coupled to a suitable source of reference potential. As will be apparent, the voltage level presented by potentiometer 98 to the comparator 96 is adjustable so that whenever the level of the signal on line 94 representing the load current exceed the preselected value from the potentiometer 98, a positive signal appears at the output of the comparator 96 on a line 102 indicating that the selected absolute value of load current has been exceeded.

As indicated hereinbefore, the current detector 78 also includes a means for sensing the rate of change of current to the load. This portion of the current detector 78 includes an inductor 104 coupled in series with the line 37 supplying current to the load while lines 106 and 108 are coupled to line 37 to sense the voltage on opposite sides of the inductor 104 and present it to the inputs of a comparator 110. As is known, the voltage across an inductor is proportional to the rate of change of current through the inductor so that the signal level presented to the line 112 connected to the output of the comparator 110 represents the rate of change in load current. The signal from the comparator 110 is presented to an absolute value circuit 114 so that irregardless of whether the rate of changing load current is positive or negative, a signal level reflecting the rate at which the current is changing is presented via line 116 to an input of the comparator 118. The other input of the comparator 118 receives a voltage input from a potentiometer 120 which has a terminal 122 coupled to a suitable source of reference potential. As before, the voltage level presented by the potentiometer 120 to the comparator 118 is adjustable so that whenever the voltage level on line 116, a signal proportional to the absolute value of the rate of change of load current, the preselected value from the potentiometer 120, a positive signal appeared at the output of the comparator 118 on line 124.

It should be understood that while in the present invention a separate inductor, inductor 104, is employed as a part of the current detector 78, any other inductor in the output of the inverter, such as inductor 38 in the output filter, could perform the function of inductor 104.

In order that the current detector responds to either preselected overcurrent condition, the signal on line 124 and the signal on line 102 are presented to the inputs of an OR gate 126 which creates an output signal on line 80 whenever either of the overcurrent conditions exists separately, or if both overcurrent conditions exist simultaneously. Thus, it will be appreciated that a signal is presented on line 80 to the auxiliary gate circuit 68 for actuation of the auxiliary commutation circuit whenever the rate of change of load current or the absolute magnitude of the load currents exceed the preselected value from its respective potentiometer.

In order to appreciate the present invention, the operation of an inverter employing the auxiliary commutation circuit will now be described. Referring to Fig. 2, the drawing depicts certain waveforms in the schematic circuit diagram of Fig. 1. Waveform 140 illustrates the voltage waveform appearing across the lines 31 and 33 and, as is seen, it is approximately a square wave. As is known, the current flowing through the lines 31 and 33 in response to this square wave is a complex waveform comprised of a fundamental component and a multitude of harmonic components which might be described by a Fourier series; however, for the purposes of this description only the fundamental component of the current to the load, waveform 142, is illustrated in the drawing. In addition, as is well known to those of ordinary skill, the phase relationship of the load current with respect to the waveform 140 is a function of the reactive impedance of the load; but, for the purposes of illustration, the worse case condition is shown in which the fundamental is 90° out-of-phase with the voltage waveform. At the time $t_0$, the thyristor 14 has been turned on by a signal applied to its control terminal from waveform generator 46. At the same time the other solid state switching element, thyristor 16, has been commutated to its nonconducting state and the fundamental component of the primary flow of current is reversing. The thyristor 14 remains in its conducting state and the current waveform 142 builds in the positive direction. Capacitor 52 which is connected to the line 31 is now charged negatively. At time $t_1$, a gating signal from the waveform generator 46 is presented to the control terminal of the thyristor 16 turning it on and the positive potential on the main commutation capacitor 52 rapidly discharges forming a short duration pulse, waveform 144, of current through inductor 54, thyristor 16, diode 22 and back to capacitor 52 charging the main commutation capacitor 52 in the reverse direction so that it can commutate the thyristor 16 at the appropriate time. This current pulse 144 decreases the current through the thyristor 14 for a sufficient period of time to allow it to switch to its nonconducting state. Now, with only the thyristor 16 in its conducting state, the magnitude of the fundamental of the load current builds in the reverse direction. The foregoing cyclic operation of such a complementary commutated inverter as shown with the present invention is well known to those of ordinary skill in the art and is not part of the concept on which the present invention is based. In the just preceding description, the main commutation capacitor 52 is sized to create a current pulse, waveform 144, for commutating the maximum rated load current through the main semiconductor switches; but, in the event of an overcurrent condition, the commutation pulse, waveform 144, could be insufficient to commutate the main semiconductor pulse. Now referring still to Fig. 3 in conjunction with Fig. 1, the operation of the auxiliary commutation circuit according to the present invention will be described. Presume that just prior to time $t_3$ in Fig. 2 an overcurrent condition occurs causing a current surge in the inverter into the load 36. At time $t_3$ the load current, waveform 142, exceeds the preselected current condition set in the current detector 78 and a signal indicating the same is presented to the line 80 and the auxiliary gate circuit 68. In response to the timing signal on line 70 and the signal indicating an overcurrent on line 80, the auxiliary gate circuit 68 selects the appropriate one of the pair of oppositely charged capacitors and presents a gating signal on line 66 to turn on the triac 62. The capacitor 58, already having its negatively charged side connected to the line 28 is now coupled in parallel with the capacitor 52 so that the combined energy available for commutation is now a function of the capacitance and voltage of both the capacitors 52 and 58. At the normal commutation time, $t_4$, the surge through the load 36 has caused the effective magnitude of the load current to exceed that which the charged capacitor 52 alone could commutate. However, because the triac 62 is turned on, the combined stored electrical energy for commutation is the sum of that on both the capacitors 52 and 58 which creates a larger commutation pulse 146 which is suitable for gating the thyristor 14 to its nonconducting state. The auxiliary gate circuit maintains the triac 62 in its conducting state for approximately 360 electrical degrees, $t_5$ in the drawing, so that the side of capacitor 58 connected to the line 31 will be charged negatively in the event of another overcurrent condition. In the event that the overcurrent condition exists during the negative going portion of the cycle with the thyristor 16 in its conducting stage, the capacitor 56 which is appropriately charged for the commutation of the thyristor 16, would be employed in parallel with the capacitor 52 for commutation, and the operation of the auxiliary commutation circuit would then be similar to that just described.

It should also be understood that the auxiliary commutation circuit can be used for a period of much longer than one cycle of the load current. For example, if an overcurrent condition still exists at time $t_5$, the auxiliary gate 68 maintains the bias signal on the control terminal of the triac 62 so that the capacitor 58 is coupled in parallel with the capacitor 52 for another time period approximately corresponding to one electrical cycle. As should be apparent, once either of the charged capacitors is switched in parallel with the capacitor 52, it will continue in that state for one cycle or multiples thereof until the overcurrent condition no longer exists.

The above embodiment is to be considered in all respects as merely illustrative and not restrictive. The scope of the invention is to be determined by the appended claims rather than by the foregoing description. It is intended that all changes in constructions which would come within the meaning and range of the equivalency of the claims are to be embraced therein.

**Claims**

1. An inverter for converting DC electrical energy into an output waveform with a substantially sinusoidal fundamental component of the type having an input means (10, 12) for receiving electrical energy from a DC source semiconductor switch means (14, 16) coupled to said input means, means (46, 42) for providing a control waveform of a frequency related to said fundamental sinusoidal component to said semiconductor switch means (14, 16) for periodically translating said switch means between its nonconducting and its conducting states, a main commutation means (52, 54) including a primary capacitor (52) and connected to said semiconductor switch means (14, 16), said primary capacitor storing electrical energy for commutating the semiconductor switch means to its nonconducting state, and auxiliary commutation means (56, 58) which is operable in response to an overcurrent condition sensed by an overcurrent detector (78) for providing additional electrical energy for commutation, characterized in that said auxiliary commutation means includes a pair of oppositely charged capacitors (56, 58) on which electrical energy is stored during inverter operation and in that each of said pair of capacitors is controlled by a selectively activatable switch means (60, 62) whenever an overcurrent condition has been sensed within the switching cycle, such that a predetermined one of said charged capacitors (56 or 58) is connected in parallel with said primary commutating capacitor (52) in the commutation sequence to provide additional electrical energy for commutation.

2. The inverter according to claim 1, characterized in that the switch means (60, 62) of said auxiliary commutating means is a semiconductor switch, that an auxiliary gate (68) is connected to the control terminal of each semiconductor switch (60, 62) for the activation thereof, and that said auxiliary gate (68) receives overcurrent signals from said overcurrent detector (78) and timing signals (42) so that depending on the phase relationship therebetween said auxiliary gate (68) provides a suitable signal for activating one of said semiconductor switches (60, 62).

3. The inverter according to claim 2, characterized in that said overcurrent detector (78) is coupled in the output path of said inverter for sensing the output load current and providing a signal to said auxiliary gate (68), if said load current or the rate of changes thereof exceed respective selected values.

## Revendications

1. Inverseur pour convertir de l'énergie électrique de courant continu en une forme d'onde de sortie ayant une composante fondamentale substentiellement sinusoïdale, cet inverseur étant du type ayant un moyen d'entrée (10, 12) destiné à recevoir l'énergie électrique d'une source de courant continu, des éléments de branchement semiconducteurs (14, 16) couplés au dit moyen d'entrée, un élément (46, 42) destiné à fournir aux dits éléments de branchement semiconducteurs (14, 16) une forme d'onde de commande d'une fréquence en relation avec ladite composante fondamentale sinusoïdale, afin de commuter périodiquement les dits éléments de branchement entre leur état non-conducteur et leur état conducteur, des éléments de commutation principaux (52, 54) comprenant un condensateur primaire (52) et connecté aux dits éléments de branchement semiconducteurs (14, 16), le dit condensateur primaire enmagasinant l'énergie électrique pour la commutation des éléments de branchement semiconducteurs à leurs état nonconducteur, et des éléments de commutation auxiliaires (56, 58) pouvant fonctionner en répose à une condition de surcharge de courant mesurée à l'aide d'un détecteur de surcharge de courant (78) pour fournir de l'énergie électrique supplémentaire pour la commutation, caractérisé en ce que les dits moyens de commutation auxiliaires comprennent une paire de condensateurs (56, 58) chargés de façon opposée dans lesquels de l'énergie électrique est enmagasinée pendant le fonctionnement de l'inverseur et en ce que chacun des condensateurs de la paire est commandé par un élément de branchement (60, 62) pouvant être déclenché sélectivement chaque fois qu'une condition de surcharge de courant a été détectée pendant le cycle de commutation, de sorte qu'un condensateur prédéterminé des dits condensateurs chargés (56 ou 58) est connecté en parallèle au dit condensateur de commutation primaire (52) pendant la séquence de commutation pour fournir l'énergie électrique supplémentaire pour la commutation.

2. Inverseur selon la revendication 1, caractérisé en ce que le dit élément de branchement (60, 62) des éléments de commutation auxiliaires est un commutateur semiconducteur, qu'une porte auxiliaire (68) est connectée à la borne de commande de chaque commutateur semiconducteur (60, 62) pour déclencher ce dernier et que la porte auxiliaire (68) reçoit des signaux de surcharge de courant du dit détecteur de surcharge de courant (78) et des signaux de rythme (42) de telle sorte que, suivant la relation de phase existant entre ces signaux, la porte auxiliaire (68) émette un signal approprié destiné à déclencher un des commutateur semiconducteur (60, 62).

3. Inverseur selon la revendication 2, caractérisé en ce que le détecteur de surcharge de courant (78) est couplé dans le parcours de sortie de l'inverseur pour détecter le courant de charge de sortie et transmettre un signal à la porte auxiliaire (68), si les caractéristiques de ce courant de surcharge ou de la vitesse de variation de celui-ci dépasse des valeurs sélectionnées respectives.

## Patentansprüche

1. Wechselrichter zum Umformen von elektrischer Gleichstromenergie in eine Ausgangswellenform mit einer im wesentlichen sinusförmigen Grundkomponente, mit einer Eingangsvorrichtung (10, 12) zur Aufnahme elektrischer Energie von einer Gleichstromquelle, Halbleiterschaltmittel (14, 16), welche mit der Eingangvorrichtung verbunden sind, Mittel (46, 42) zur Bereitstellung einer Steuerwellenform mit einer Frequenz, welche mit der sinusförmigen Grundfrequenz in Beziehung steht, für die Halbleiterschaltmittel (14, 16), um dieselben periodisch zwischen ihrem Sperrzustand und ihrem Durchlasszustand hin und her zu schalten, einer Hauptkommutierungsvorrichtung (52, 54), mei einem primären Kondensator (52), die mit den Halbleiterschaltmitteln (14, 16) verbunden ist, wobei der primäre Kondensator die elektrische Energie für die Umschaltung der Halbleiterschaltmittel in ihren Sperrzustand speichert, und einer sekundären Kommutierungsvorrichtung (56, 58), welche in Abhängigkeit von einem Überlastungsstromzustand, welcher mittels eines Überlastungsstromdetektors (78) festgestellt wird, betätigbar ist, um zusätzliche elektrische Energie für die Kommutierung bereitzustellen, dadurch gekennzeichnet, dass die sekundäre Kommutierungsvorrichtung ein Paar eingegengesetzt geladener Kondensatoren (56, 58) umfasst in denen elektrische Energie während des Wechselrichterbetriebs gespeichert wird, und dadurch, dass jeder Kondensator des Paares von einer selektiv betätigbaren Schaltvorrichtung (60, 62) gesteuert wird, wenn ein Überlastungsstromzustand innerhalb des Schaltzykluses festgestellt worden ist, so dass ein vorgegebener Kondensator der geladenen Kondensatoren (56, 58) parallel zum primären Kommutierungskondensator (52) in der Kommutierungsfolge geschaltet wird, um zusätzliche elektrische Energie für die Kommutierung bereitzustellen.

2. Wechselrichter nach Anspruch 1, dadurch gekennzeichnet, dass die Schaltvorrichtung (60, 62) der sekundären Kommutierungsvorrichtung ein Halbleiterschalter ist, dass ein Hilfsverknüpfungsglied (68) an die Steuerklemme eines jeden Halbleiterschalters (60, 62) zur Betätigung desselben angeschlossen ist und dass die Hilfsverknüpfungsvorrichtung (68) Überlastungsstromsignale vom Überlastungsstromdetektor (78) und Taktsignale (42) erhält, so dass in Abhängigkeit von der Phasenbeziehung zwischen diesen Signalen die Hilfsverknüpfungsvorrichtung (68) ein geeignetes Signal zur Betätigung einer der Halbleiterschalter (60, 62) bereitstellt.

3. Wechselrichter nach Anspruch 2, dadurch gekennzeichnet, dass der Überlastungsstromdetektor (78) in den Ausgangsstrompfad des Wechselrichters für Messung des Ausgangsbelastungsstromes geschaltet ist und ein Signal für die Hilfsverknüpfungsvorrichtung (68) bereitstellt, wenn der Belastungsstrom oder dessen Änderungsgeschwindigkeit jeweilige ausgewählte Werte übersteigen.

FIG. 1

LOAD

CURRENT DETECTOR (FIG. 3)

AUXILIARY GATE

WAVEFORM GENERATOR

CLOCK

Vdc

36, 40, 38, 35, 34, 28, 26, 27, 78, 37, 52, 54, 31, 33, 29, 60, 62, 56, 58, 80, 68, 66, 64, 70, 22, 14, 24, 16, 48, 50, 46, 30, 12, 10, 42, 44, 18, 20

1

FIG. 3

FIG. 2